# EUROPÄISCHE PATENTSCHRIFT

(11) **EP 2 701 359 B1**
(45) Veröffentlichungstag und Bekanntmachung des Hinweises auf die Patenterteilung: **03.10.2018**
(21) Anmeldenummer: 13003654.4
(22) Anmeldetag: 19.07.2013
(51) Int. Cl.: H04L 29/06, H04W 4/00, H04W 8/20, H04W 8/26, H04W 12/04, H04W 8/24, H04W 4/60

(54) **Verfahren zum Erhalten von Teilnehmeridentitätsdaten**
Method for obtaining subscriber identity data
Procédé d'obtention de données d'identité de participants

(30) Priorität: 22.08.2012 DE 102012016734
(43) Veröffentlichungstag der Anmeldung: 26.02.2014
(73) Patentinhaber: Giesecke+Devrient Mobile Security GmbH, 81677 München (DE)
(72) Erfinder: Dietz, Ulrich, 81669 München (DE)

(56) Entgegenhaltungen:
- US-A1- 2006 183 500
- US-A1- 2009 253 409
- ERICSSON: "Architecture Modifications and Alternatives for Remote Management of USIM Application on M2M Equipment", 3GPP DRAFT; S3_080163_PCR_TR33812_FUNCARCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG3, Nr. Sanya; 20080218, 18. Februar 2008 (2008-02-18), XP050280533, [gefunden am 2008-02-18]

## Beschreibung

Die Erfindung betrifft ein Verfahren zum Erhalten von Teilnehmeridentitätsdaten sowie ein Teilnehmeridentitätsmodul.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/oder Datendienstes, jedem Teilnehmer in dem Kommunikationsnetzwerk eindeutig zuzuordnen. Weiterhin ist es dem Betreiber möglich, einen Netzzugang, also die Einbuchung in das Kommunikationsnetz, zu ermöglichen, sobald eine Authentisierung des Teilnehmers stattgefunden hat oder den Netzzugang zu verweigern, falls eine Authentisierung des Teilnehmers nicht möglich ist.

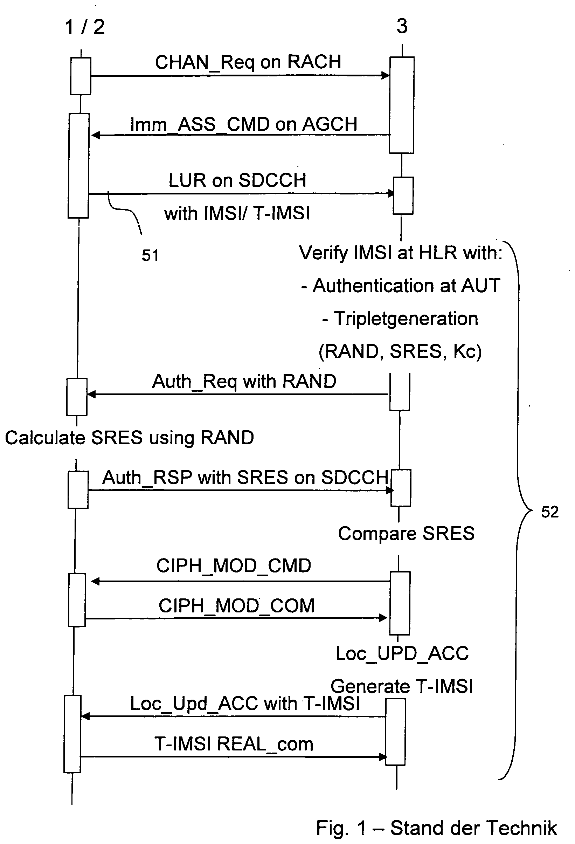

Meldet sich ein Teilnehmer an einem Kommunikationsnetz an, so wird mittels der Teilnehmeridentitätsdaten im Kommunikationsnetz festgestellt, ob der Teilnehmer im Kommunikationsnetz bekannt ist und welche Dienste des Kommunikationsnetzes durch diesen Teilnehmer genutzt werden können und dürfen. Diese Teilnehmeridentitätsdaten befinden sich in einem Teilnehmeridentitätsmodul, auch als Subscriber Identity Modul (SIM) bezeichnet. Üblicherweise wird jedes Endgerät mit einem Teilnehmeridentitätsmodul ausgestattet. Ein nicht eindeutig identifizierbarer bzw. authentifizierbarer Teilnehmer am Kommunikationsnetz wird gemäß heutigem Standard vom Netzwerk abgewiesen, es ist daher keine Kommunikation, insbesondere kein Datenaustausch sowie die Nutzung von Diensten des Kommunikationsnetzes möglich. In Figur 1 ist der gemäß GSM standardisierte Vorgang zum Einbuchen in ein GSM -Kommunikationsnetzwerk beispielhaft dargestellt.

Bislang werden die Teilnehmeridentitätsdaten in einer Personalisierungsphase während der Herstellung des Teilnehmeridentitätsmoduls eingebracht. Problematisch ist dabei, dass für einen Betreiber eines Kommunikationsnetzes Kosten für das Vorhalten und Handhaben dieser Teilnehmeridentitätsdaten entstehen, sodass es wünschenswert ist, dass im Moment des ersten Einsatzes on-the-fly generierte Teilnehmeridentitätsdaten auch im Kommunikationsnetzwerk zur Authentisierung/Identifizierung des jeweiligen Teilnehmers verwendet werden. Da die Teilnehmeridentitätsmodule aber vorrausichtlich erst zu einem späteren Zeitpunkt - insbesondere nach Abschluss eines Vertrages zwischen Netzbetreiber und Teilnehmer - tatsächlich in ein Endgerät eingebracht werden, entstehen unnötige Kosten für den Betreiber für die Zeit, in der die Teilnehmeridentitätsdaten ungenutzt sind.

Ein weiteres Problem ist die zunehmende Miniaturisierung der Endgeräte. Bislang sind die Teilnehmeridentitätsdaten in Kartenform im Endgerät integriert, weshalb zum einen ein Lesegerät im Endgerät und zum anderen ein für die Funktionalität unnötig großvolumiges Teilnehmeridentitätsmodul in das Endgerät eingebracht wird. Zukünftig wird es in Endgeräten vermehrt zum Einsatz festverdrahteter Teilnehmeridentitätsmodule kommen, beispielsweise durch Verlötung des standardisierten Formfaktors MFF2 im Endgerät als SMD, wodurch enorme Platzeinsparungen im Endgerät erzielt werden können. Derartige Teilnehmeridentitätsmodule müssen gemäß heutigem Netzwerkstandards bereits mit Teilnehmeridentitätsdaten eines bestimmten Kommunikationsnetzwerkbetreibers personalisiert werden, bevor sie in das Endgerät eingebracht werden, um Dienste am Kommunikationsnetz nutzen zu können. Weiterhin müsste zu einem frühen Zeitpunkt der Herstellung der Endgeräte deren geografischer Einsatzort bekannt sein, um für die Authentisierung/Identifizierung spezifischen Anforderungen des Netzwerkes zu entsprechen. Dies führt zu einer erheblichen Zeitverzögerung, einem Mehraufwand sowie ggf. zu Absatzschwierigkeiten für die Herstellung der Endgeräte. Daher wäre es wünschenswert, in die Endgeräte zum Zeitpunkt der Herstellung ein unpersonalisiertes Teilnehmeridentitätsmodul einzubringen.

Derartige Geräte könnten nach heutigen Standards zur Netzeinbuchung und Nutzung von Diensten nicht verwendet werden, da die Teilnehmeridentitätsdaten zur Authentisierung und Identifizierung des Teilnehmers im Kommunikationsnetz nicht vorhanden sind.

Dieses Problem ist auch auf die sogenannte Machine-To-Machine Kommunikation, kurz M2M, übertragbar, bei der zumeist ohne menschliche Interaktion Daten und Informationen über das Kommunikationsnetzwerk ausgetauscht werden sollen. Bei der stetig steigenden Anzahl von Endgeräten - man geht im Jahr 2020 von ca. 50 Milliarden mobilfunkfähigen Endgeräten aus, die irgendwo in der Welt produziert werden und weltweit eingesetzt werden könnten - ist es aus Kosteneffizienz- und Logistikgründen fraglich alle Endgeräte per se mit (initialen) Teilnehmeridentitätsdaten auszustatten, insbesondere, wenn ein (vorläufiger bzw. temporärer) Besitzer eines Endgeräts die Kommunikation des Endgeräts über ein bzw. das spezielle Kommunikationsnetzwerk nicht wünscht. Speziell durch die Forderung eines weltweiten Einsatzes der Endgeräte müsste ein Betreiber imense Kosten für Roaming-Vereinbarungen treffen.

Es ist bereits bekannt, Teilnehmeridentitätsmodule über die Luftschnittstelle, OTA, oder einer Internetverbindung, OTI, zu verwalten und zu aktualisieren. Dazu werden standardisierte Protokolle unter Verwendung eines Short-Message-Service (SMS) bzw. eines Internet Protokolls (IP) angewendet. In der WO 2010/ 093312 A1 ist ein Verfahren zur On Demand Activation, kurz ODA Aktivierung von SIMs beschrieben. Dabei werden die in die SIM eingebrachten Teilnehmeridentitätsdaten in einem netzwerkseitigen ODA-Server daraufhin überprüft, ob sie in einem PLMN bekannt sind und ggf. im PLMN bekannt gemacht. Bei diesem Verfahren können weitere Teilnehmeridentitätsdaten in die SIM eingebracht bzw. geändert werden. Auf eine Personalisierung der SIM und Wegfall des Einbringens von Teilnehmeridentitätsdaten kann allerdings nicht verzichtet werden, sodass die adressierten Probleme mit einem derartigen Verfahren nicht gelöst werden können.

In der am 08. Juni 2011 unter Anmeldenummer 11004668.7 hinterlegten europäischen Anmeldung der Anmelderin wird ein Verfahren zum Einbuchen in ein Netzwerk beschrieben. Hierbei wird die SIM mit vorläufigen Teilnehmeridentitätsdaten personalisiert. Während einer Ersteinbuchung wird das standardisierte Authentisierungsverfahren für GSM, UMTS und LTE angewendet, wobei anstelle einer Zufallszahl im Triplet/Quintet eine IMSI an die SIM übertragen wird. Auch in diesem Verfahren wird auf eine Personalisierung der SIM nicht verzichtet, sodass die adressierten Probleme mit diesem Verfahren nicht gelöst werden.

US 2006/0183500 beschreibt Verfahren zum Bereitstellen von Teilnehmeridentitätsdaten auf einem Teilnehmeridentitätsmodul in Form einer SIM-Karte. Dabei sind anfänglich auf der SIM-Karte ein anfänglicher IMSI-Code (initial IMSI code) und ein anfänglicher Schlüssel (initial key) hinterlegt, die durch die beschriebenen Verfahren durch einen Betriebs-IMSI-Code (effective IMSI code) und ggf. einen Betriebsschlüssel (effective key) ersetzt werden. Gemäß der US 2006/0183500 wird das Ersetzen des anfänglichen IMSI-Codes durch den Betriebs-IMSI-Code dadurch ausgelöst, dass der Benutzer der SIM-Karte mittels seines mobilen Endgeräts entweder einen Anruf bei einem IVR-System (IVR; interactive voice response) tätigt oder eine SMS an ein SMSC sendet. In diesen beiden in US 2006/0183500 offenbarten Fällen ist es somit notwendig, dass sich die SIM-Karte bzw. das dazugehörige mobile Endgerät in ein entsprechendes Mobilfunknetzwerk einbuchen kann, d.h. sich gegenüber dem Mobilfunknetzwerk authentisieren kann, um den Anruf zu tätigen bzw. die SMS zu verschicken. Hierzu müssen gemäß der technischen Lehre der US 2006/0183500 bereits von Anfang an auf der SIM-Karte personalisierte Daten hinterlegt sein, nämlich der anfängliche IMSI-Code und der anfängliche Schlüssel.

Der Erfindung liegt daher die Aufgabe zugrunde, ein flexibleres, kostengünstigeres und einfacheres Verfahren für das Ersteinbuchen in ein Kommunikationssystem zu beschreiben. Insbesondere soll das Verfahren auf Standardmechanismen des Mobilfunknetzwerks basieren.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein Verfahren zum Erhalten von Teilnehmeridentitätsdaten in einem Teilnehmeridentitätsmodul zur Nutzung von Diensten eines Kommunikationssystems durch ein dem Teilnehmeridentitätsmodul zugeordnetes Endgerät gelöst. Das Verfahren umfasst die Schritte: Senden einer Anfrage an das Kommunikationssystem zur Authentisierung des Teilnehmeridentitätsmoduls an dem Kommunikationssystem durch das, dem Teilnehmeridentitätsmodul zugeordnete Endgerät und Empfangen von Teilnehmeridentitätsdaten in dem Teilnehmeridentitätsmodul durch das Kommunikationssystem zur Nutzung von Diensten in dem Kommunikationssystem. Insbesondere beinhaltet die Anfrage eine Eigenschaft des Teilnehmeridentitätsmoduls, wobei diese Eigenschaft dem Kommunikationssystem anzeigt, dass das Teilnehmeridentitätsmodul ohne Teilnehmeridentitätsdaten zur Authentisierung am Kommunikationssystem ausgestattet ist.

Der Grundgedanke der Erfindung beruht darauf, dass ein unpersonalisiertes Teilnehmeridentitätsmodul, also ein Teilnehmeridentitätsmodul ohne Teilnehmeridentitätsdaten, nicht prinzipiell vom Netzwerk abgewiesen wird, sondern während einer frühen Phase der netzwerkseitigen Authentisierungsanfrage bereits die Eigenschaft angibt, dass es unpersonalisiert ist und die Fähigkeit angibt, dass es fernpersonalisiert werden kann. In vorteilhafter Weise ist dadurch die Herstellung der Teilnehmeridentitätsmodule flexibler ausgestaltbar, eine Personalisierung kann erfolgen, sobald das Teilnehmeridentitätsmodul mit einem Endgerät erstmalig betriebsfähig gemacht wird.

Zwar kann die Authentisierung/Identifizierung des Moduls durch das Kommunikationssystem nicht erfolgen, das Modul wird dennoch nicht abgewiesen und erhält zumindest einen in den Diensten beschränkten Zugang zum Kommunikationssystem und in Folgeschritten die Teilnehmeridentitätsdaten des Kommunikationssystems. Das Bereitstellen der Dienste durch das Kommunikationssystem und das Übertragen der Teilnehmeridentitätsdaten können vom Kommunikationssystem finanziell berechnet werden.

Die erfindungsgemäße Anfrage ist eine Standortaktualisierungsanfrage, beispielsweise ein Location Update Request, der verwendet wird, um Teilnehmeridentitätsdaten im Netzwerk bekannt zu machen und einen Teilnehmer in einem Netzwerk einzubuchen. Sobald ein Endgerät eine Kommunikation mit dem Kommunikationssystem aufbauen möchte und in diesem Rahmen eine Authentisierung mittels des Teilnehmeridentitätsmoduls vorzunehmen ist, wird diese Anfrage versendet. Die Anfrage ist erfindungsgemäß dergestalt, dass die Eigenschaft des Teilnehmeridentitätsmoduls während eines Einbuchungsversuchs dem Kommunikationssystem mitgeteilt wird. Bevorzugt ist die Anfrage des Teilnehmeridentitätsmoduls erstmalig am Kommunikationssystem erfolgt, das heißt, das Teilnehmeridentitätsmodul hat bislang keine Teilnehmeridentitätsdaten angefordert.

Die Eigenschaft des Teilnehmeridentitätsmoduls gibt an, ob und in welcher Form Teilnehmeridentitätsdaten im Teilnehmeridentitätsmodul vorhanden sind. Eine Eigenschaft ist insbesondere, dass das Teilnehmeridentitätsmodul keine Teilnehmeridentitätsdaten enthält, also nicht auf einen Teilnehmer im Kommunikationssystem personalisiert ist. Das Teilnehmeridentitätsmodul kann für diese Eigenschaft trotzdem teilnehmeridentitätsmodulindividuelle Kennungsdaten aufweisen, die während der Herstellung des Teilnehmeridentitätsmoduls eingebracht worden sind. Erfindungsgemäß besteht ein wesentlicher Unterschied zwischen Kennungsdaten und Teilnehmeridentitätsdaten.

Kennungsdaten sind erfindungsgemäß Daten, die teilnehmeridentitätsmodulindividuell sind. Die Kennung kann dabei eine für das gesamte Kommunikationsnetzwerk eindeutige Kennnummer des Teilnehmeridentitätsmoduls sein. Dies ist insbesondere eine Identifikationsnummer des Halbleiterchips, kurz Chip-ID. Eine alternative Bezeichnung ist die gemäß Standardisierung momentan diskutierte Bezeichnung embedded Integrated Chip Card Identification, kurz eICCID. Chip-ID und eICCID werden in dieser Anmeldung synonymial verwendet. Die Chip-ID unterscheidet sich von der ICCID dahingehend, dass die ICCID ein Teil der Teilnehmeridentitätsdaten ist und von einem Kommunikationsnetzanbieter zum nächsten variiert, während die Chip-ID ein Kennungsdatum der UICC ist und diese als Plattform eindeutig kennzeichnet Durch die Chip-ID wird jedes Modul unabhängig von den eingebrachten Teilnehmeridentitätsdaten eindeutig im Verfahren identifizierbar. Kennungsdaten im Sinn der Erfindung sind sowohl teilnehmerunabhängig, kommunikationssystemunabhängig, länderunabhängig als auch endgeräteunabhängig. Die Teilnehmeridentitätsmodule können zum Erhalten dieser Kennungsdaten vorpersonalisiert sein, allerdings enthält diese Vorpersonalisierung keine Teilnehmeridentitätsdaten sondern ausschließlich teilnehmeridentitätsmodulindividuelle Kennungsdaten. Alternativ ist die Chip-ID bereits während der Herstellung des Teilnehmeridentitätsmoduls eingebracht.

Bei einem Endgerät im Sinn der Erfindung handelt es sich prinzipiell um ein Gerät oder eine Gerätekomponente, welches Mittel zur Kommunikation mit einem Kommunikationssystem aufweist, um Dienste des Kommunikationssystems nutzen zu können. Beispielsweise ist ein mobiles Endgerät wie ein Mobiltelefon, ein Smart-Phone, ein Tablet-PC, ein Notebook, ein PDA, unter dem Begriff zu fassen. Unter dem Endgerät können beispielsweise auch Multimediaendgeräte wie digitale Bilderrahmen, Audiogeräte, Fernsehgeräte, E-Book-Reader, Set-Top Boxen, Digitalkameras verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen welche Mittel, insbesondere Mobilfunkmodems, zur Kommunikation mit dem Kommunikationsnetzwerk aufweisen.

Bei einem Teilnehmeridentitätsmodul im Sinne der Erfindung handelt es sich um ein in Baugröße und Ressourcenumfang reduziertes Modul, welches einen Mikrocontroller und mindestens eine Datenschnittstelle zur Kommunikation mit einem Endgerät aufweist. Dieses Teilnehmeridentitätsmodul weist einen Speicherbereich auf, indem die Teilnehmeridentitätsdaten sicher eingebracht sind, um Manipulations- und/oder Missbrauchsversuche bei der Identifizierung und/oder Authentisierung am Netzwerk zu verhindern. Das Teilnehmeridentitätsmodul ist mittels des Endgeräts betriebsfähig.

Bei dem Teilnehmeridentitätsmodul handelt es sich beispielsweise um eine Chipkarte, auch UICC oder umgangssprachlich SIM-Karte, in einem mobilen Kommunikationssystem mit, auf einem Chip gespeicherten maschinenlesbaren Teilnehmeridentitätsdaten des Teilnehmers. Derartige Teilnehmeridentitätsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des Endgeräts, beispielsweise eines fest verdrahteten elektronischen Bausteins. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ kann ein Teilnehmeridentitätsmodul integraler Bestandteil eines Machine-to-Machine-, kurz M2M-, Moduls sein. Diese Module dienen der Fernüberwachung, -kontrolle und -wartung von Endgeräten wie Maschinen, Anlagen und Systemen mittels des Kommunikationssystems. Sie können alternativ auch für Zähleinheiten wie Stromzähler, Warmwasserzähler oä. verwendet werden.

Alternativ ist das Teilnehmeridentitätsmodul als eine Kombination aus Hard-und Softwarekomponenten in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets oder ähnlich ausgebildet.

Teilnehmeridentitätsdaten im Sinn der Erfindung sind zum einen Daten, die einen Teilnehmer eindeutig im Kommunikationsnetz identifizieren, beispielsweise eine International Mobile Subscriber Identity (IMSI) und/oder teilnehmerspezifische Daten. Die IMSI ist das in einem Mobilfunkkommunikationsnetzwerk eindeutige Teilnehmeridentitätsdatum. Sie setzt sich zusammen aus dem Landescode MCC (Mobile Country Code), dem Netzwerkcode MNC (Mobile Network Code) und einer laufenden Nummer, die vom Netzbetreiber vergeben wird.

Darüber dienen Teilnehmeridentitätsdaten dazu, einen Teilnehmer eindeutig am Kommunikationsnetz zu authentisieren. Hierzu werden auf die UICC beispielsweise ein Authentisierungsalgorithmus, spezifische Algorithmusparameter, ein kryptografischer Authentisierungsschlüssel und/oder ein kryptografischer Over-The-Air (OTA) Schlüssel aufgebracht. Insbesondere sind die Teilnehmeridentitätsdaten initiale Teilnehmeridentitätsdaten, die dazu verwendet werden, um in ein spezielles Kommunikationsnetz umgeleitet zu werden, wobei in diesem Kommunikationsnetz die finalen Teilnehmeridentitätsdaten für das Teilnehmeridentitätsmodul erhalten werden.

Die Anzahl der Teilnehmeridentitätsdaten auf dem Teilnehmeridentitätsmodul ist nicht beschränkt. Es ist angedacht, in Zukunft auf einem Teilnehmeridentitätsmodul dreißig oder mehr Teilnehmeridentitätsdaten vorzusehen.

Ein Teilnehmer im Sinn der Erfindung ist beispielsweise eine Person, die mittels des Endgeräts auf Dienste des Kommunikationsnetzes zugreifen möchte. Als ein Teilnehmer ist auch ein Endgerät in einer M2M Umgebung zu verstehen.

Ein Kommunikationssystem im Sinn der Erfindung ist eine technische Einrichtung, auf der die Übertragung von Signalen unter Identifizierung und/oder Authentisierung des Kommunikationsteilnehmers stattfindet, wonach technische Dienste angeboten werden. Das Kommunikationssystem ist bevorzugt in Mobilfunkzellen aufgebaut, wobei die Größe einer Funkzelle abhängig von meteorologischen und geografischen Gegebenheiten sowie der verwendeten Funkantenne. Insbesondere wird in dieser Erfindung ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden. Prinzipiell sind auch alle Code Division Multiple Access basierten Funknetze, kurz CDMA-Netze, unter den Begriff des Kommunikationssystems zu fassen.

Unter einem Dienst im Sinne der Erfindung ist insbesondere ein Sprachdienst oder ein Datendienst zu verstehen, mit dem Informationen und/oder Daten über das Kommunikationsnetzwerk übertragen werden.

In einer Ausgestaltung der Erfindung werden vor dem Empfangen der Teilnehmeridentitätsdaten Kennungsdaten zum Identifizieren des Teilnehmeridentitätsmoduls von dem Teilnehmeridentitätsmodul an das Kommunikationssystem gesendet. Als Kennungsdaten kann eine teilnehmeridentitätsmodulweit eindeutige Kennung wie die Chip-ID verwendet werden, um das Teilnehmeridentitätsmodul am Kommunikationssystem eindeutig zu identifizieren.

In einer Ausgestaltung der Erfindung wird ein kryptografischer Algorithmus angewendet, in dessen Verlauf eine sichere Übertragung der Kennung gewährleistet wird, beispielsweise durch die Aushandlung eines Sitzungsschlüssels. Als kryptografischer Algorithmus kann insbesondere das Diffie-Hellman-Verfahren angewendet werden.

Insbesondere kann ein teilnehmeridentitätsmodulweit eindeutiger kryptografischer Schlüssel verwendet werden, um die Kennung wie die Chip-ID zu verschlüsseln. Die Kennungsdaten können dann die Kombination aus Chip-ID und mit dem kryptografischen Schlüssel verschlüsselten Chip-ID sein.

Insbesondere ist eine Teilnehmeridentitätsverwaltung als eine Instanz des Kommunikationssystems vorgesehen, welches die Teilnehmeridentitätsdaten für das Teilnehmeridentitätsmodul bereitstellt. Diese Teilnehmeridentitätsverwaltung (des verantwotlichen, endgültig zuständigen PLMNs), führt eine Plausibilitätsprüfung der Kennungsdaten durch, indem sie diese Chip-ID wieder zu entschlüsseln versucht. Ist die entschlüsselte und im Klartext gesendete Chip-ID gleich, waren die Kennungsdaten plausibel. Anschließend werden die Teilnehmeridentitätsdaten über das Kommunikationssystem mit dem teilnehmeridentitätsmodulindividuellen kryptografischen Schlüssel verschlüsselt an das Teilnehmeridentitätsmodul gesendet.

Der kryptografische Schlüssel ist insbesondere ein symmetrischer Schlüssel, der sowohl dem Teilnehmeridentitätsmodul als auch dem Kommunikationssystem bekannt ist. Alternativ ist der kryptografische Schlüssel ein asymmetrisches Schlüsselpaar. Der Schlüssel wird im Rahmen einer Vorpersonalisierung in das Teilnehmeridentitätsmodul eingebracht und ist teilnehmeridentitätsmodulindividuell. Dieser Schlüssel unterscheidet sich von dem Authentisierungsschlüssel Ki, welcher kommunikationsnetzindividuell ist.

In einer bevorzugten Ausgestaltung sendet das Teilnehmeridentitätsmodul nach dem Empfangen der Teilnehmeridentitätsdaten erneut eine Anfrage unter Verwendung der empfangenen Teilnehmeridentitätsdaten an das Kommunikationssystem zur Authentisierung des Teilnehmeridentitätsmoduls an dem Kommunikationssystem. Ab diesem Zeitpunkt weist das Teilnehmeridentitätsmodul die Eigenschaft auf, dass es personalisiert ist.

Die Kennungsdaten sind dabei während der Chipherstellung oder während einer Grundpersonalisierung in das Teilnehmeridentitätsmodul eingebracht. Diese Grundpersonalisierung beinhaltet insbesondere keine Teilnehmeridentitätsdaten wie Netzwerkauthentisierungsschlüssel oder IMSI, d.h. die Kennungsdaten sind generischer Form.

Insbesondere wird die Eigenschaft in der Anfrage in Form eines speziell definierten Registrierungsnachrichtentyps gemäß dem Standard 3GPP TS 24.008 an das Kommunikationssystem gesendet. Somit muss zwar der Standard um diesen Registrierungsnachrichtentyp erweitert werden, allerdings würden weltweit alle Kommunikationssysteme mit Hilfe dieses Typs die Eigenschaft des Teilnehmeridentitätsmoduls erkennen und würden eine Abweisung durch das Kommunikationssystem verhindern.

Alternativ wird die Eigenschaft in ein spezifisches Datenfeld eines der bereits gemäß Standard 3GPP TS 24.008 vorhandenen Registrierungsnachrichtentyp innerhalb der Location Update Request Nachricht eingebracht. Somit kann die bestehende Infrastruktur ohne große Adaption weiter verwendet werden, die Teilnehmeridentitätsmodule werden anhand gängiger Verfahren ausgewertet und mittels des spezifischen Datenfelds charakterisiert.

Die Kennungsdaten können erfindungsgemäß in ein anderes Datenfeld gemäß 3GPP TS 24.008 eingetragen und gesendet werden.

Bevorzugt leitet das Kommunikationsnetz die Kommunikation mit dem Teilnehmeridentitätsmodul nach einem Erkennen der vordefinierten Eigenschaft zu einer Teilnehmeridentitätsdatenverwaltung weiter. Somit ist die logische Kommunikation zwischen einem unpersonalisierten Teilnehmeridentitätsmodul und der Teilnehmeridentitätsdatenverwaltung hergestellt. Das Modul wurde insbesondere nicht abgewiesen, eine Fernpersonalisierung ist somit ermöglicht. In einem Kommunikationsnetzwerk kann die Kommunikation auf die Kommunikation zur Teilnehmerverwaltung beschränkt werden. Dass heisst, dass die Grundkommunikation nicht missbräuchlich verwendet werden kann. Dabei wird das beschriebene Verfahren bis zum Erhalt eindeutiger Teilnehmeridentitätsdaten auf Signalisierungskanälen des Kommunikationssystems durchgeführt. Eine Sprach- und/oder Nutzdatenkommunikation durch den endgeräteseitigen Nutzer ist dabei nicht möglich. Das erfindungsgemäße Verfahren ist bis zum Erhalten der Teilnehmeridentitätsdaten intransparent für den Benutzer.

Zur Absicherung der Kommunikation befähigen die empfangenen Teilnehmeridentitätsdaten im Teilnehmeridentitätsmodul nur zu einer eingeschränkten Nutzung von Diensten durch das Endgerät im Kommunikationssystem. Diese Einschränkungen umfassen insbesondere nicht das Einbuchen in das Kommunikationssystem sowie das Weiterleiten zu einem bevorzugten Kommunikationsnetz in dem Kommunikationssystem. Diese Einschränkungen umfassen insbesondere das Nutzen von Sprachdiensten und Multimediadiensten.

In einer bevorzugten Ausgestaltung wird das Teilnehmeridentitätsmodul vom Kommunikationssystem abgewiesen, falls das Teilnehmeridentitätsmodul nicht innerhalb einer vordefinierten Zeitspanne erneut eine Anfrage unter Verwendung von empfangenen Teilnehmeridentitätsdaten sendet. Dies hat den Vorteil, dass der Kommunikationskanal, den das Teilnehmeridentitätsmodul vom Kommunikationssystem zugewiesen bekommen hat, wieder frei wird und das Kommunikationssystem nicht aufgrund unpersonalisierter Teilnehmeridentitätsmodule blockiert. Ein weiterer Vorteil ist, dass das Teilnehmeridentitätsmodul nach dem Erhalt der Teilnehmeridentitätsdaten eine Anfrage an ein alternatives Kommunikationsnetz gesendet hat und somit die Kommunikation mit dem Kommunikationsnetz, über das die Teilnehmeridentitätsdaten erhalten wurden, beendet ist.

In einer bevorzugten Ausgestaltung der Erfindung wird die Anzahl der gesendeten Anfragen in Kommunikationssystem protokolliert, um Manipulationen durch zu häufiges Versenden der Anfrage durch ein Teilnehmeridentitätsmodul unterbinden zu können. Dies wird auch als Denial-of-Service bezeichnet.

In einer bevorzugten Ausgestaltung der Erfindung wird in den Kennungsdaten eine Adresse einer speziellen Teilnehmeridentitätsverwaltung hinterlegt. Dies führt dazu, dass das System die Adresse verwenden kann, um zu einer speziellen Teilnehmeridentitätsverwaltung umzuleiten.

In einer bevorzugten Ausgestaltung besteht das Kommunikationssystem aus mehreren mobilen Kommunikationsnetzen. Somit erfolgt das Senden der Anfrage an ein erstes Kommunikationsnetz, welches in Kommunikationsreichweite mit dem Teilnehmeridentitätsmodul ist. Im Erfindungsgedanken ist enthalten, dass nach dem Erhalten der Teilnehmeridentitätsdaten ein alternatives Kommunikationsnetzwerk ausgewählt und zur weiteren Kommunikation verwendet werden kann. Somit ist eine Ersteinbuchung ohne Netzvorauswahl erzielt.

In einer bevorzugten Ausgestaltung der Erfindung ist im Kommunikationsnetz eine Datenbankinstanz vorgesehen. Die Datenbankinstanz weist Einträge von Teilnehmeridentitätsmodulen, insbesondere deren Kennungsdaten und die erhaltenen Teilnehmeridentitätsdaten auf.

In einer Weiterbildung weist die Datenbankinstanz teilnehmeridentitätsmodulindividuelle kryptografische Schlüssel auf, mit denen das Teilnehmeridentitätsmodul die Kennungsdaten kryptografisch sichert. Die Datenbankinstanz entschlüsselt die Kennungsdaten. Bei erfolgreicher Entschlüsselung durch die Datenbankinstanz sind die Kennungsdaten für das Kommunikationssystem plausibel.

Die Datenbankinstanz ist bevorzugt eine zentrale Instanz aller Kommunikationsnetzbetreiber mit stark beschränkten Zugriffsrechten. Insbesondere können Instanzen der einzelnen Kommunikationsnetzbetreiber auf diese Datenbankinstanz zugreifen, um entweder weitere Chip-IDs einzutragen und/oder Chip-IDs mit kryptografischen Schlüsseln zu verknüpfen und/oder Informationen bezüglich der Teilnehmeridentitätsmodule aus der Datenbank abzurufen. Alternativ können Teilnehmeridentitätsverwaltungen und/oder Teilnehmeridentitätsmodulhersteller auch auf diese Datenbankinstanz zugreifen.

Im Erfindungsgrundgedanken ist weiterhin ein Teilnehmeridentitätsmodul zur Verwendung in einem Kommunikationssystem, wobei das Teilnehmeridentitätsmodul eindeutige Kennungsdaten und einen Teilnehmeridentitätsmodulschlüssel aufweist, mit welchem die Kennungsdaten an dem Kommunikationssystem verifiziert werden kann.

Bevorzugt übernimmt eine Teilnehmerprofilverwaltungsapplikation, kurz Sub-Man-Client, in dem Teilnehmeridentitätsmodul die Ausführung des erfindungsgemäßen Verfahrens, insbesondere das Senden der Anfrage an das Kommunikationssystem und das Einbringen der erhaltenen Teilnehmeridentitätsdaten in den dafür vorgesehenen Speicherbereich des Teilnehmeridentitätsmoduls.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein Einbuchen in ein Kommunikationsnetz unter Senden einer Anfrage gemäß dem GSM-Standard
- Figur 2: Ein erfindungsgemäßes System zum Erhalten von Teilnehmeridentitätsdaten
- Figur 3: Ein Blockschaltbild eines erfindungsgemäßen Teilnehmeridentitätsmoduls
- Figur 4: Eine detaillierte Darstellung eines Teilnehmeridentitätsmoduls
- Figur 5: Teilnehmeridentitätsdaten zum Erhalten in einem erfindungsgemäßen Teilnehmeridentitätsmodul
- Figur 6: Ein beispielhaftes Ablaufdiagramm des erfindungsgemäßen Verfahrens

Figur 1 zeigt ein Einbuchen in ein Kommunikationssystem 3 unter Senden einer Anfrage durch das Endgerät 1 in Zusammenwirken mit einem Teilnehmeridentitätsmodul 2 gemäß dem bekannten Standard 3GPP TS 24.008. Wann immer ein Endgerät 1 Netzzugang einfordert sendet es zunächst einen Channel_Request (CHAN_REQ) auf einem Steuerkanal, hier dem Random Access Channel (RACH). Das Kommunikationssystem 3, insbesondere das BTS des Kommunikationssystems 3, antwortet auf dies CHAN_REQ mit einer Kanalzuweisungsnachricht (IMM_ASS_CMD). Das Endgerät 1 schaltet daraufhin auf einen neuen Steuerkanal, beispielsweise dem Stand Alone Dedicated Control Channel (SDCCH) und antwortet dem Kommunikationssystem 3 mit einer Standortaktualisierungsanfrage 51, dem sogenannten Location Update Request (LUR). In diesem LUR 51 sind die Teilnehmeridentitätsdaten 24, insbesondere die IMSI bzw. eine temporäre IMSI. Im Folgeschritt 52 verifiziert das System 3 den Teilnehmer. Dabei wird der LUR von der BSS an das Mobile Switching Center MSC und das Visiting Location Register VLR gesendet. Das VLR leitet die Teilnehmeridentitätsdaten 24 zum Home Location Register HLR weiter, bei dem das Teilnehmeridentitätsmodul 2 anhand der Teilnehmeridentitätsdaten 24 beheimatet sein sollte, und fordert die Verifizierung des Teilnehmeridentitätsmoduls 2 und weitere Teilnehmeridentitätsdaten 24 insbesondere das Authentisierungstriplet oder -quintet vom HLR/AUC an. Daraufhin leitet das HLR die Anfrage des VLR an das Authentisierungscenter AUC weiter. Das AUC generiert ein Authentisierungstriplet bestehend aus einer Zufallszahl RAND, dem - auch in dem Teilnehmeridentitätsmodul 2 enthaltenen - Authentisierungschlüssel Ki sowie einer Challenge SRES und sendet es an das HLR. Das HLR überprüft die vom Teilnehmeridentitätsmodul 2 erhaltenen Teilnehmeridentitätsdaten 24 und sendet das vom AUC erhaltene Triplet an das MSC/VLR. Das MSC/VLR sendet einen Authentisierungsanfrage AUTH_REQ zusammen mit der RAND des Triplets an das Endgerät 1, woraufhin SRES im Teilnehmeridentitätsmodul 2 errechnet wird. Das Endgerät 1 antwortet mit einer AUTH_RSP beinhaltend den errechneten SRES auf dem Kommunikationskanal SDCCH. Das Kommunikationssystem 3, vergleicht das SRES vom Teilnehmeridentitätsmodul 2 mit dem SRES vom AUC, bei Übereinstimmung gilt das Teilnehmeridentitätsmodul 2 am Kommunikationssystem 3 als authentisiert.

Anschließend erfolgt ein CIPHER_MOD_CMD an das Endgerät 1, woraufhin das Endgerät 1 in einen Verschlüsselungsmodus wechselt und dies dem System 3 mit CIPHER_MOD_COM anzeigt. Ab diesem Zeitpunkt erfolgt die Kommunikation zwischen Endgerät 1 und System 3 verschlüsselt. Das System 3 generiert ggf. eine neue temporäre IMSI und versendet eine Bestätigung des erfolgreichen Einbuchens LOC_UPD_ACC ggf. unter Bekanntgabe der neuen T_IMSI. Mittels einer nicht dargestellten Aufforderung CHAN_REL wird der Kommunikationskanal am SDCCH abgebaut und das Endgerät in einen Bereitschaftsmodus IDLE_MOD geschalten.

Es ist einfach ersichtlich, dass ohne die Teilnehmeridentitätsdaten 24, insbesondere der IMSI (T_IMSI), des Ki sowie dem Algorithmusschlüssel SRES eine Authentisierung am System 3 nicht erfolgen würde.

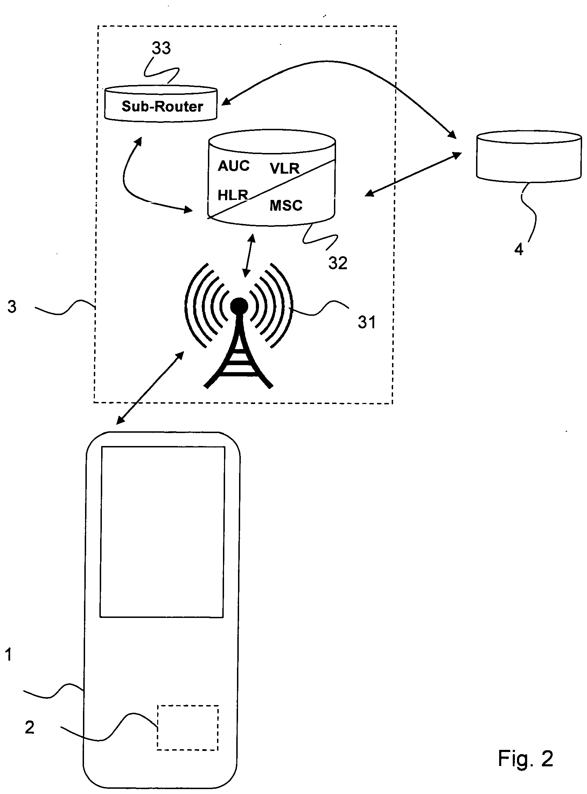

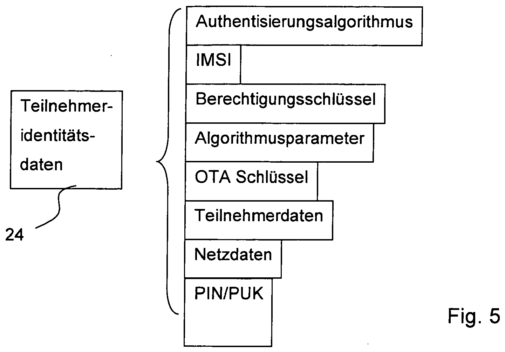

In Figur 2 ist nunmehr ein erfindungsgemäßes System aufgezeigt. Das Endgerät 1 weist ein unpersonalisiertes Teilnehmeridentitätsmodul 2 auf. Mit unpersonalisiert wird hierin verstanden, dass keine Teilnehmeridentitätsdaten 24, die in Figur 5 näher beschrieben sind, im Teilnehmeridentitätsmodul 2 enthalten sind. Zur Kommunikation mit einem Kommunikationssystem 3 muss das Endgerät 1 sich mittels des Teilnehmeridentitätsmoduls 2 authentisieren und identifizieren. Das System 3, bevorzugt ein Mobilfunknetz, ist aus einer Vielzahl von Kommunikationszellen 31 aufgebaut. Die bereits vorgestellten Kommunikationsnetzwerkinstanzen MSC, VLR, HLR, AUC werden stellvertretend als Netzwerkinstanzen 32 bezeichnet.

Im erfindungsgemäßen Verfahren ist vorgesehen, dass das Teilnehmeridentitätsmodul 2 unter Verwendung des Endgeräts 1 eine Anfrage 51 gemäß Standard sendet. Diese Anfrage 51 beinhaltet erfindungsgemäß die Eigenschaft des Teilnehmeridentitätsmoduls 2, dass keine Teilnehmeridentitätsdaten 24 im Modul 2 vorhanden sind, aber das Modul 2 eingerichtet ist, Teilnehmeridentitätsdaten 24 über die Luftschnittstelle, OTA, zu erhalten. Daraufhin wird das Endgerät 1 nicht vom System 3 abgewiesen, sondern erhält Teilnehmeridentitätsdaten 24 von einer netzwerkseitigen Teilnehmeridentitätsdatenverwaltung 4, auch als Subscription Manager bezeichnet. Dies geschieht entweder über die herkömmlichen Instanzen 32 oder mittels einer Umleitverwaltung 33.

Die Kommunikation zwischen dem Teilnehmeridentitätsmodul 2 und dem System 3 ist dabei in seinen Diensten eingeschränkt, beispielsweise im Modus SMS_ONLY, sodass das Teilnehmeridentitätsmodul 2 reguläre, initiale und/oder finale Teilnehmeridentitätsdaten 24 empfangen kann.

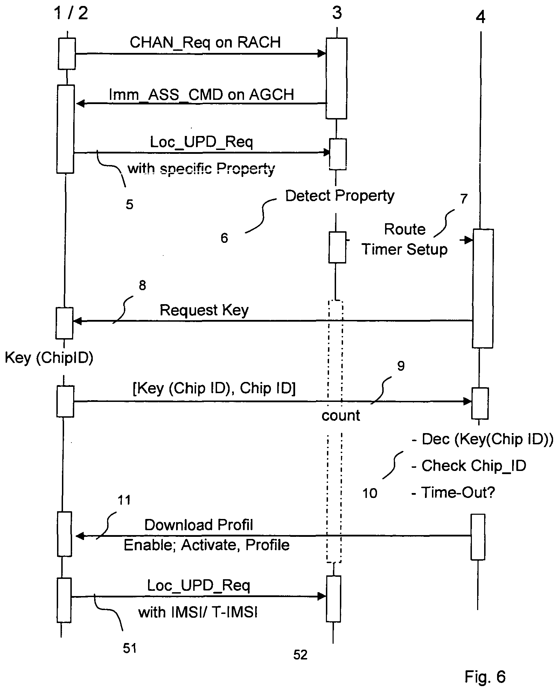

Die Anfrage 51 an das System 3 wird dabei in der Form abgeändert, dass das gemäß Standard 3GPP TS 24.008 beschriebene Verfahren eine veränderte Einbuchungsabfolge erhält, wobei insbesondere die 'Location Updating Request' Anfrage angepasst wird, um ein in einer Kommunikationszelle 31 neu erkanntes Endgerät nicht sofort abzuweisen, wenn es sich nicht authentisiert, siehe auch Figur 6.

Dazu wird erfindungsgemäß vorgeschlagen, einen weiteren Typ von Registrierungsnachricht gemäß Tabelle 10.2 des Standards 3GPP TS 24.008 'Message types for Mobility Management' Registration Messages einzuführen. Dieser Typ von Nachricht enthält die Eigenschaft, dass das sendende Teilnehmeridentitätsmodul 2 keine Teilnehmeridentitätsdaten 24 zur Authentisierung aufweist, aber diese Teilnehmeridentitätsdaten 24 vom Netzwerk erhalten möchte.

Alternativ wird gemäß Tabelle 9.2.17 des Standards 3GPP TS 24.008 die 'Location Updating Request' Anfrage 51 derart abgeändert, dass ein weiteres Datenfeld zur Identifizierung von Teilnehmeridentitätsmodulen 24 ohne Teilnehmeridentitätsdaten 24 definiert wird, welches versucht, sich an einem System 3 anzumelden.

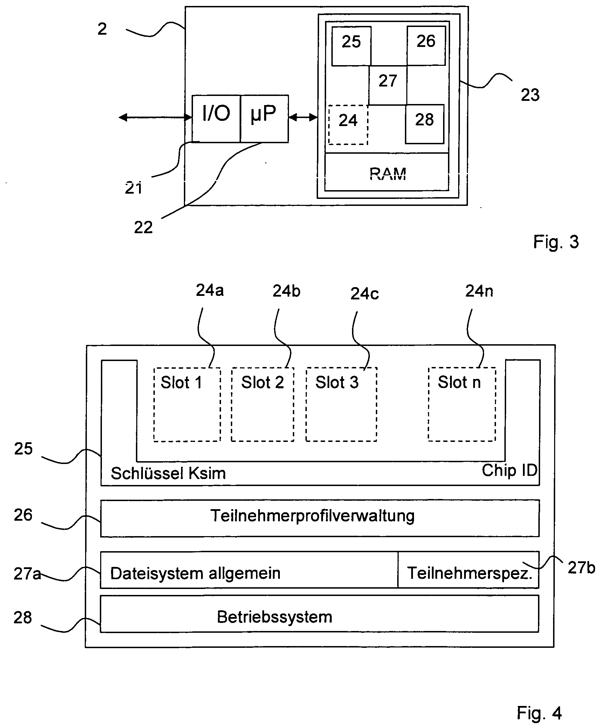

In Figur 3 ist ein Blockschaltbild eines Teilnehmeridentitätsmoduls 2 dargestellt. Dabei weist das Teilnehmeridentitätsmodul 2 eine Datenschnittstelle 21 auf. Eine zentrale Recheneinheit 22 verbindet die Datenschnittstelle 21 mit einem Speicher 23, der flüchtig (RAM) oder nicht flüchtig (ROM, EEPROM, FLASH) ausgebildet ist. Im Speicherbereich 23 sind Kennungsdaten 25, eine Teilnehmerprofilverwaltung 26 in Form einer ausführbaren Softwareapplikation, das Dateisystem 27 und das Betriebssystem 28 abgelegt. Nach Erhalt der Teilnehmeridentitätsdaten 24 werden diese durch die Teilnehmerprofilverwaltung 26 im Speicherbereich 23 abgelegt.

In Figur 4 ist eine beispielhafte Schichtendarstellung der Programm- und Datenhierarchie in einem erfindungsgemäßen Teilnehmeridentitätsmodul 2 dargestellt. Dabei ist im Speicherbereich 23 des Teilnehmeridentitätsmoduls 2 ein Betriebssystem 28 mit einem damit verknüpften allgemeinen Dateisystem 27 abgelegt, wobei das Dateisystem 27 über das Betriebssystem 28 administrierbar ist. Das Dateisystem 27 ist in ein allgemeines Dateisystem 27a sowie ein Teilnehmerspezifisches Dateisystem 27b unterteilt, beide Teile sind über das Betriebssystem 28 administrierbar. Die Teilnehmerprofilverwaltung 26 greift wiederum auf das Dateisystems 27 zu. In den Speicherbereich 23 sind weiterhin eindeutige Modulkennungsdaten 25 eingebracht, insbesondere eine teilnehmeridentitätsmodulspezifische Chip-ID sowie beispielsweise ein kryptografischer Schlüssel Ksim. Ksim ist bevorzugt ein symmetrischer Schlüssel, der in der Teilnehmeridentitätsdatenverwaltung 4 bekannt ist. Eine Zusammengehörigkeit zwischen Chip-ID und Ksim wird einer Teilnehmerprofilverwaltung 4 zur Verfügung gestellt, bzw. ist der Ksim für eine Gruppe von Teilnehmeridentitätsmodulen 2 gleich.

Die Modulkennungsdaten 25 werden im Rahmen einer Vorpersonalisierung des Moduls 2 in den Speicherbereich eingebracht und sind in einer Ausführungsvariante der Erfindung modulindividuell und im System 3 eindeutig. Die Chip-ID ist beispielsweise die Seriennummer des Halbleiterchips. Er kann auch bereits während der Herstellung des Chips eingebracht werden, wodurch die Vorpersonalisierung als Fertigungsschritt entfallen kann. Im Speicherbereich 23 ist ebenfalls vorgesehen, Teilnehmeridentitätsdaten 24 einzubringen. Diese sind über die Teilnehmerprofilverwaltung 26 administrierbar.

Gemäß Figur 4 handelt es sich um ein Teilnehmeridentitätsmodul 2, welches mit einem oder mit einer Mehrzahl von Teilnehmeridentitätsprofilen ausgestattet ist. Jedes Teilnehmeridentitätsprofil wird in einem reservierten und abgeschotteten Bereich (auch "Slot" genannt) abgelegt. Ein Slot ist in der Lage Teilnehmeridentitätsdaten 24a, 24b, 24c, 24n, die einen Teilnehmer an jeweils unterschiedlichen Kommunikationsnetzen 34 eindeutig identifizieren und/oder authentisieren, aufzunehmen. Die Profile sind dabei einzeln hinzufügbar, aktivierbar, nutzbar, deaktivierbar und auch löschbar. Eine Administration der Profile und der dafür notwendigen Daten, Authentisierungen und Verschlüsselung wird mittels der Teilnehmerprofilverwaltung 26 durchgeführt. Die jeweiligen Daten werden insbesondere über eine Luftschnittstelle, insbesondere Over-The-Air (OTA) in das jeweilige Teilnehmeridentitätsmodul 2 geladen. Eine Eigenschaft des Teilnehmeridentitätsmoduls 2 ist, dass das Teilnehmeridentitätsmodul ohne Teilnehmeridentitätsdaten 24 ausgestattet ist, was durch die gestrichelten Linien dargestellt ist. Während der Durchführung des erfindungsgemäßen Verfahrens werden in die Slots 1 bis n Teilnehmeridentitätsdaten 24 eingebracht, welche vom Kommunikationssystem 3 erhalten werden.

Mit derartigen Teilnehmeridentitätsmodulen 2 ist es nicht mehr zwingend notwendig, dass ein Betreiber eines Netzwerkes 34 für die Identifizierung und Authentisierung eines Teilnehmers an seinem Netzwerk 34 auf Basis eines geschlossenen Vertrags ein neues Teilnehmeridentitätsmodul 4 erzeugt und an den Teilnehmer in Form einer SIM Karte ausgibt. Stattdessen werden Teilnehmeridentitätsdaten 24a, b, c, n durch den Netzbetreiber auf Basis des geschlossenen Vertrages erstellt. Die Teilnehmeridentitätsdaten 24a, b, c, n werden dann in das bereits im Endgerät 1 eingebrachte Teilnehmeridentitätsmodul 4 hinzugefügt und können parallel zu anderen Teilnehmeridentitätsdaten 24a, b, c, n existieren. Dadurch ergibt sich, dass das Teilnehmeridentitätsmodul 4 nicht mehr mechanisch lösbar in einem Endgerät 1 eingebracht werden muss, stattdessen können fest verdrahtete Teilnehmeridentitätsmodule 4, kurz eUICCs, im Endgerät 1 eingebracht sein. Dies spart Platz im Endgerät, wodurch andere Funktionalitäten im Endgerät 1 realisiert werden können, ohne die Bauform des Endgeräts 1 vergrößern zu müssen und erhöht die Flexibilität.

Gemäß Figur 5 sind beispielhafte Teilnehmeridentitätsdaten 24 aufgelistet. Diese Teilnehmeridentitätsdaten 24 gemäß Figur 5 umfassen insbesondere eine Angabe über den beim Betreiber des Netzwerkes 34 verwendet Authentisierungsalgorithmus (A3, A5), die International Mobile Subscriber Identity (IMSI), die zur Authentisierung verwendeten kryptografischen Berechtigungsschlüssel Ki, den Schlüsselerzeugungsalgorithmus A8, ggf. netzbetreiberspezifische OTA-Schlüssel Kota, um eine sichere OTA-Kommunikation zu ermöglichen, teilnehmerspezifische Identifizierungsgeheimnisse (PIN, PUK), Teilnehmerdaten, wie Name, Vorname, ID-Nummer, Geburtsdatum, Geburtsort etc; Netzbetreiberdaten, beispielsweise welche Dienste im jeweiligen Netz 34 für den Teilnehmer freigeschaltet sind. Diese Auflistung ist keinesfalls allumfassend und kann in alternativen Beispielen auch weniger, mehr oder andere Daten umfassen.

In Figur 6 ist nun eine Ausführung des erfindungsgemäßen Verfahrens für das GSM Netz in Form eines Ablaufdiagramms dargestellt. Zunächst erfolgt die Zuweisung eines Kommunikationskanals über CHAN_Reg und IMM_ASS_CMD, wie bereits in der Beschreibung zu Figur 1 dargelegt. Erfindungsgemäß sendet das Teilnehmeridentitätsmodul 2 im Schritt 5 eine Anfrage Loc_UPD_Req, beinhaltend die Eigenschaft, dass es ohne Teilnehmeridentifizierungsdaten 24 ausgestattet ist. Dies geschieht entweder durch die Einführung eines neuen Nachrichtentyps gemäß Tabelle 10.2 der technischen Spezifikation 3GPP TS 24.008. Alternativ wird gemäß Tabelle 9.2.17 das Feld "Mobile Identity" verwendet, um dem Netzwerk 34 anzuzeigen, dass ein unpersonalisiertes Teilnehmeridentitätsmodul 2 am System 3 nach Teilnehmeridentitätsdaten 24 anfragt Das System 3 erkennt im Schritt 6 diese Eigenschaft des Teilnehmeridentitätsmoduls 2 und baut gemäß Schritt 7 eine Kommunikationsverbindung mit einer Teilnehmeridentitätsdatenverwaltung 4 auf, an die diese Anfrage des Teilnehmeridentitätsmoduls 2 weitergeleitet wird. Gemäß Schritt 8 fragt daraufhin die Teilnehmeridentitätsdatenverwaltung 4 beim Teilnehmeridentitätsmodul 2 nach den Kennungsdaten 25. Das Teilnehmeridentitätsmodul 2 erstellt daraufhin eine Antwort, bestehend aus der Chip-ID und der Chip-ID verschlüsselt mit dem kryptografischen Schlüssel Ksim. Diese Antwort wird im Schritt 9 an die Teilnehmeridentitätsdatenverwaltung 4 gesendet. Die Verwaltung 4 entschlüsselt die verschlüsselte Chip-ID mit dem symmetrischen Schlüssel Ksim und vergleicht die entschlüsselte Chip-ID mit der vom Teilnehmeridentitätsmodul 2 gesendeten Chip-ID. Sind die Chip-IDs identisch, gelten die Kennungsdaten 25 als plausibel. Anschließend sendet die Teilnehmeridentitätsverwaltung 4 im Schritt 11 Teilnehmeridentitätsdaten 24 an das Teilnehmeridentitätsmodul 2 und veranlasst die Aktivierung der Daten 24. Die Teilnehmerprofilverwaltung 26 installiert die Teilnehmeridentitätsdaten 24 und schaltet diese auf aktiviert. Die gesamte Kommunikation zwischen Endgerät 1, System 3 sowie Teilnehmeridentitätsdatenverwaltung 4 verläuft über Mobilfunk via OTA. Anschließend sendet das Teilnehmeridentitätsmodul eine LUR 51 gemäß Figur 1, um sich am Netzwerk gemäß Schritt 52 zu authentisieren.

In einer speziellen Ausgestaltung des Verfahrens gemäß Figur 6 wird im Schritt 7 eine Zeitschaltung (Timer) mit einer vordefinierten Zeitspanne aktiviert. Wird die Zeitspanne überschritten, ohne das sich das Teilnehmeridentitätsmodul 2 mit einem LUR 51 zur Authentisierung anmeldet, wird der Kommunikationskanal freigegeben, das Verfahren gilt als nicht erfolgreich abgeschlossen. Anstelle der Zeitschaltung kann auch die Anzahl von Anfragen 5 im Schritt 9 durch das Kommunikationssystem 3 überwacht werden, sodass ein Modul 2 mit den gleichen Kennungsdaten 25, welches innerhalb einer gewissen Zeitspanne eine vordefinierte Anzahl von Anfragen sendet, ebenfalls vom System 3 abgewiesen wird. Damit kann sichergestellt werden, dass ein gemäß Schritt 5 anfragendes Modul 2 nicht zu lange und/oder zu oft einen Kommunikationskanal blockiert, was die Kommunikationsfähigkeit des Systems 3 lähmen würde. Damit ist das Verfahren gegen Manipulationen abgesichert.

In einer Weiterbildung des erfindungsgemäßen Verfahrens wird in den Kennungsdaten 25 eine Adresse einer speziellen Teilnehmeridentitätsverwaltung 4 hinterlegt. In der LUR 5 des Moduls 2 wird zusätzlich zu der Eigenschaft auch noch diese Adresse mitgeteilt, sodass im Schritt 7 nicht zu einer willkürlichen Teilnehmeridentitätsverwaltung 4, sondern zu der speziellen Teilnehmeridentitätsverwaltung 4 umgeleitet wird.

In einer nicht figürlich dargestellten Ausgestaltung des erfindungsgemäßen Verfahrens wird die Chip-ID als Kennungsdatum ohne Verschlüsselung mit Ksim übertragen. Dabei wird davon ausgegangen, dass alle Teilnehmeridentitätsmodule 2, die die Eigenschaft aufweisen, keine Teilnehmeridentitätsdaten 24 aufzuweisen, automatisch an eine Datenbankinstanz weitergeleitet werden, um dort Teilnehmeridentitätsdaten 24 zu erhalten.

In einer nicht figürlich dargestellten Ausgestaltung des erfindungsgemäßen Verfahrens handelt das Teilnehmeridentitätsmodul 2 mit dem Kommunikationssystem - bzw. mit der Datenbankinstanz des Kommunikationssystems - einen Sitzungsschlüssel mit Hilfe des Diffie-Hellman-Algorithmus aus, um die Kennungsdaten 25 dem Kommunikationssystem zu senden.

### Bezugszeichenliste

- 1: Endgerät
- 2: Teilnehmeridentitätsmodul
21 Schnittstelle
22 Zentralrecheneinheit
23 Speicherbereich
24a,b,c,n Teilnehmeridentitätsdaten, Teilnehmerprofile
25 Eindeutige Modulkennungsdaten
26 Teilnehmerprofilverwaltung
27 Dateisystem
27a Allgemeines Dateisytem
27b Teilnehmerspezifisches Dateisystem
28 Betriebssystem, Firmware
- 3: Kommunikationssystem
31 Kommunikationszelle
32 Netzwerkinstanz, MSC, VLR, HLR, AUC
33 Umleitungsverwaltung
34 Spezielles Kommunikationsnetz
- 4: Teilnehmeridentitätsdatenverwaltung, Subskriptionsmanager
- 5: Senden einer Anfrage zur Authentisierung
51 Anfrage zur Authentisierung mit Teilnehmeridentitätsdaten
52 Verifizieren der Teilnehmeridentitätsdaten und SIM Authentisierung
- 6: Erkennen der Eigenschaft
- 7: Umleiten zu Teilnehmeridentitätsdatenverwaltung
- 8: Kennungsdatenanfrage
- 9: Kennungsdatenbereitstellung
- 10: Plausibilitätsprüfung
- 11: Empfangen von Teilnehmeridentitätsdaten

## Patentansprüche

1. Verfahren zum Erhalten (11) von Teilnehmeridentitätsdaten (24) in einem Teilnehmeridentitätsmodul (2) zur Nutzung von Diensten eines Kommunikationssystems (3) durch ein dem Teilnehmeridentitätsmodul (2) zugeordnetes Endgerät (1) mit den Verfahrensschritten:
- Senden einer Anfrage (5) an das Kommunikationssystem (3) zur Authentisierung des Teilnehmeridentitätsmoduls (2) an dem Kommunikationssystem (3) durch das dem Teilnehmeridentitätsmodul (2) zugeordnete Endgerät (1);
- Empfangen (11) von Teilnehmeridentitätsdaten (24) in dem Teilnehmeridentitätsmodul (2) durch das Kommunikationssystem (3) zur Nutzung von Diensten in dem Kommunikationssystem (3);
- wobei die Anfrage (5) eine Eigenschaft des Teilnehmeridentitätsmoduls (2) beinhaltet, wobei diese Eigenschaft dem Kommunikationssystem (3) anzeigt, dass das Teilnehmeridentitätsmodul (2) ohne Teilnehmeridentitätsdaten (24) zur Authentisierung am Kommunikationssystem (3) ausgestattet ist, und wobei die Anfrage (5) mittels eines Location Update Requests erfolgt.

2. Verfahren nach Anspruch 1, wobei vor dem Empfangen (11) der Teilnehmeridentitätsdaten (24) Kennungsdaten (25) zum eindeutigen Identifizieren des Teilnehmeridentitätsmoduls (2) in dem Kommunikationssystem (3) von dem Teilnehmeridentitätsmodul (2) an das Kommunikationssystem (3) gesendet werden.

3. Verfahren nach einem der vorhergehenden Ansprüche, wobei vor dem Empfangen (11) der Teilnehmeridentitätsdaten (24):
- Kennungsdaten (25) zum eindeutigen Identifizieren des Teilnehmeridentitätsmoduls (2) in dem Kommunikationssystem (3) von dem Teilnehmeridentitätsmodul (2) an das Kommunikationssystem (3) gesendet werden; und
- die Kennungsdaten (25) durch das Kommunikationssystem (3) auf Plausibilität geprüft (10) werden.

4. Verfahren nach einem der vorhergehenden Ansprüche, wobei die Anfrage (5) des Teilnehmeridentitätsmoduls (2) erstmalig ist und die Teilnehmeridentitätsdaten (24) initiale Teilnehmeridentitätsdaten sind.

5. Verfahren nach einem der vorhergehenden Ansprüche, wobei die Eigenschaft in Form eines definierten Registrierungsnachrichtentyps an das Kommunikationssystem (3) gesendet wird.

6. Verfahren nach einem der vorhergehenden Ansprüche, wobei die Eigenschaft in ein Datenfeld eines Registrierungsnachrichtentyps innerhalb einer "Location Update Request"-Nachricht eingebracht wird.

7. Verfahren nach einem der vorhergehenden Ansprüche, wobei im Kommunikationssystem (3) zumindest eine Teilnehmeridentitätsverwaltung (4) vorgesehen ist, welche die Teilnehmeridentitätsdaten (24) für das Teilnehmeridentitätsmodul (2) bereitstellt.

8. Verfahren nach einem der vorhergehenden Ansprüche, wobei das Kommunikationssystem (3) die Kommunikation mit dem Teilnehmeridentitätsmodul (2) nach einem Erkennen (6) der Eigenschaft zu einer Teilnehmeridentitätsdatenverwaltung (4) weiterleitet.

9. Verfahren nach einem der vorhergehenden Ansprüche, wobei die empfangenen Teilnehmeridentitätsdaten (24) im Teilnehmeridentitätsmodul (2) zur eingeschränkten Nutzung von Diensten durch das Endgerät (1) im Kommunikationssystem (3) befähigen.

10. Verfahren nach einem der vorhergehenden Ansprüche, wobei das Teilnehmeridentitätsmodul (2) nach dem Empfangen (11) der Teilnehmeridentitätsdaten (24) erneut eine Anfrage (51) unter Verwendung der empfangenen Teilnehmeridentitätsdaten (24) an das Kommunikationssystem (3) zur Authentisierung des Teilnehmeridentitätsmoduls (2) an dem Kommunikationssystem (3) sendet.

11. Verfahren nach einem der vorhergehenden Ansprüche, wobei das Teilnehmeridentitätsmodul (2) vom Kommunikationssystem (3) abgewiesen wird, falls das Teilnehmeridentitätsmodul (2) nicht innerhalb einer vordefinierten Zeitspanne erneut eine Anfrage (51) unter Verwendung von empfangenen Teilnehmeridentitätsdaten (24) sendet.

12. Verfahren nach einem der vorhergehenden Ansprüche, wobei das Kommunikationssystem (3) mehrere mobile Kommunikationsnetze (34) aufweist.

## Claims

1. A method for obtaining (11) subscriber identity data (24) in a subscriber identity module (2) for the use of services of a communication system (3) by a terminal (1) allocated to the subscriber identity module (2), comprising the method steps of:
- sending a request (5) to the communication system (3) for the authentication of the subscriber identity module (2) to the communication system (3) by the terminal (1) allocated to the subscriber identity module (2);
- receiving (11) of subscriber identity data (24) in the subscriber identity module (2) by the communication system (3) for the use of services in the communication system (3);
- wherein the request (5) contains a property of the subscriber identity module (2), wherein this property indicates to the communication system (3) that the subscriber identity module (2) is equipped without subscriber identity data (24) for authentication to the communication system (3), and wherein the request (5) is effected by means of a location update request.

2. The method according to claim 1, wherein, prior to receiving (11) the subscriber identity data (24), identification data (25) for uniquely identifying the subscriber identity module (2) in the communication system (3) are sent from the subscriber identity module (2) to the communication system (3).

3. The method according to any of the preceding claims, wherein prior to receiving (11) the subscriber identity data (24):
- identification data (25) for uniquely identifying the subscriber identity module (2) in the communication system (3) are sent from the subscriber identity module (2) to the communication system (3); and
- the identification data (25) are checked by the communication system (3) for plausibility (10).

4. The method according to any of the preceding claims, wherein the request (5) of the subscriber identity module (2) takes place for the first time and the subscriber identity data (24) are initial subscriber identity data.

5. The method according to any of the preceding claims, wherein the property is sent to the communication system (3) in the form of a defined registration message type.

6. The method according to any of the preceding claims, wherein the property is introduced into a data field of a registration message type within a "location update request" message.

7. The method according to any of the preceding claims, wherein in the communication system (3) at least one subscriber identity management (4) is provided, which makes available the subscriber identity data (24) for the subscriber identity module (2).

8. The method according to any of the preceding claims, wherein the communication system (3) forwards the communication with the subscriber identity module (2) to a subscriber identity data management (4) upon detecting (6) the property.

9. The method according to any of the preceding claims, wherein the received subscriber identity data (24) in the subscriber identity module (2) enable restricted use of services by the terminal (1) in the communication system (3).

10. The method according to any of the preceding claims, wherein, upon receiving (11) the subscriber identity data (24), the subscriber identity module (2) again sends a request (51) to the communication system (3) employing the received subscriber identity data (24) for authentication of the subscriber identity module (2) to the communication system (3).

11. The method according to any of the preceding claims, wherein the subscriber identity module (2) is rejected by the communication system (3), if the subscriber identity module (2) does not again send a request (51) employing received subscriber identity data (24) within a predefined period of time.

12. The method according to any of the preceding claims, wherein the communication system (3) has several mobile communication networks (34).

## Revendications

1. Procédé d'obtention (11) de données d'identité d'abonné (24) dans un module d'identité d'abonné (2), aux fins de l'utilisation de services d'un système de communication (3) par un terminal (1) affecté au module d'identité d'abonné (2), comportant les étapes :
- envoi d'une demande (5) au système de communication (3) pour l'authentification du module d'identité d'abonné (2) au système de communication (3), par le terminal (1) affecté au module d'identité d'abonné (2),
- réception (11) de données d'identité d'abonné (24) dans le module d'identité d'abonné (2) par le système de communication (3) pour l'utilisation de services dans le système de communication (3) ;
- cependant que la demande (5) contient une propriété du module d'identité d'abonné (2), cependant que cette propriété indique au système de communication (3) que le module d'identité d'abonné (2) est, sans données d'identité d'abonné (24), équipé pour l'authentification au système de communication (3), et cependant que la demande (5) a lieu au moyen d'une « Location Update Request » (demande de mise à jour de localisation).

2. Procédé selon la revendication 1, cependant que, avant la réception (11) des données d'identité d'abonné (24), des données d'identifiant (25) sont, pour une identification univoque du module d'identité d'abonné (2) dans le système de communication (3), envoyées du module d'identité d'abonné (2) au système de communication (3).

3. Procédé selon une des revendications précédentes, cependant que, avant la réception (11) des données d'identité d'abonné (24) :
- des données d'identifiant (25) destinées à une identification univoque du module d'identité d'abonné (2) dans le système de communication (3) sont envoyées du module d'identité d'abonné (2) au système de communication (3) ; et
- les données d'identifiant (25) sont vérifiées (10) par le système de communication (3) pour en discerner la plausibilité.

4. Procédé selon une des revendications précédentes, cependant que la demande (5) du module d'identité d'abonné (2) est effectuée pour la première fois et que les données d'identité d'abonné (24) sont des données d'identité d'abonné initiales.

5. Procédé selon une des revendications précédentes, cependant que la propriété est envoyée sous forme d'un type défini de message d'enregistrement au système de communication (3).

6. Procédé selon une des revendications précédentes, cependant que la propriété est insérée dans un champ de données d'un type de message d'enregistrement à l'intérieur d'un message de « Location Update Request » (demande de mise à jour de localisation).

7. Procédé selon une des revendications précédentes, cependant que, dans le système de communication (3), au moins une gestion d'identité d'abonné (4) est prévue, laquelle met les données d'identité d'abonné (24) à la disposition du module d'identité d'abonné (2).

8. Procédé selon une des revendications précédentes, cependant que le système de communication (3) transmet la communication avec le module d'identité d'abonné (2) à une gestion d'identité d'abonné (4) après la reconnaissance (6) de la propriété.

9. Procédé selon une des revendications précédentes, cependant que les données d'identité d'abonné (24) reçues habilitent dans le module d'identité d'abonné (2) à l'utilisation restreinte de services par le terminal (1) dans le système de communication (3).

10. Procédé selon une des revendications précédentes, cependant que le module d'identité d'abonné (2) envoie, après la réception (11) des données d'identité d'abonné (24), à nouveau une demande (51), par utilisation des données d'identité d'abonné (24) reçues, au système de communication (3) pour l'authentification du module d'identité d'abonné (2) au système de communication (3).

11. Procédé selon une des revendications précédentes, cependant que le module d'identité d'abonné (2) est refusé par le système de communication (3) si le module d'identité d'abonné (2) n'envoie pas à nouveau, dans un délai prédéfini, une demande (51) par utilisation de données d'identité d'abonné (24) reçues.

12. Procédé selon une des revendications précédentes, cependant que le système de communication (3) comporte plusieurs réseaux de communication (34) mobiles.
